# EUROPÄISCHE PATENTSCHRIFT

(11) **EP 4 505 301 B1**
(45) Veröffentlichungstag und Bekanntmachung des Hinweises auf die Patenterteilung: **22.04.2026**
(21) Anmeldenummer: 23723580.9
(22) Anmeldetag: 05.05.2023
(51) Int. Cl.: G06F 9/54, G06F 9/46, G06F 21/53

(54) **VERFAHREN UND SYSTEM ZUR BEREITSTELLUNG VON STEUERUNGSANWENDUNGEN**
METHOD AND SYSTEM FOR PROVIDING CONTROL APPLICATIONS
PROCÉDURE ET SYSTÈME DE MISE À DISPOSITION D'APPLICATIONS DE CONTRÔLE

(30) Priorität: 08.06.2022 EP 22177736
(43) Veröffentlichungstag der Anmeldung: 12.02.2025
(73) Patentinhaber: Siemens Aktiengesellschaft, 80333 München (DE)
(72) Erfinder: ALBRECHT, Harald, 90475 Nürnberg (DE); FEIST, Christian Peter, 80689 München (DE); KNIERIM, Christian, 81373 München (DE)
(74) Vertreter: Siemens Patent Attorneys
(86) Internationale Anmeldenummer: PCT/EP2023/061952
(87) Internationale Veröffentlichungsnummer: WO 2023/237270

(56) Entgegenhaltungen:
- EP-A1- 3 937 039
- US-A1- 2019 182 295

## Beschreibung

Die vorliegende Erfindung betrifft ein Verfahren zur Bereitstellung von Steuerungsanwendungen, insbesondere Steuerungsanwendungen für ein industrielles Automatisierungssystem, und ein System zur Durchführung dieses Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

WO 2022/042905 A1 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

In der älteren europäischen Patentanmeldung mit dem Anmeldeaktenzeichen 21212849.0 ist ein Verfahren zur Bereitstellung von Steuerungsanwendungen beschrieben, bei dem die Steuerungsanwendungen jeweils mittels Ablaufsteuerungskomponenten bereitgestellt werden, die in eine mittels einer Server-Einrichtung gebildete Ablaufsteuerungsumgebung ladbar und dort ausführbar sind. Steuerungsanwendungen, die ausgewählte Sicherheitsberechtigungen erfordern, werden jeweils eine Kennzeichnung als sicherheitskritische Steuerungsanwendung zugeordnet. Für die Steuerungsanwendungen, denen eine Kennzeichnung als sicherheitskritische Steuerungsanwendung zugeordnet ist, wird jeweils zumindest eine Ablaufbedingung für die ausgewählten Sicherheitsberechtigungen festgelegt. Die Ablaufsteuerungsumgebung überwacht während einer Ausführung der Ablaufsteuerungskomponenten für die Steuerungsanwendungen jeweils ein Eintreten der jeweiligen Ablaufbedingung. Die Ausführung der Ablaufsteuerungskomponenten wird jeweils bei Eintreten der jeweiligen Ablaufbedingung beendet.

US 2019/182295 A1 betrifft eine Verteilung und Verwaltung von Diensten in virtuellen Umgebungen. Systemdienste und Anwendungen werden über mehrere Container verteilt, die in separaten Laufzeitumgebungen für Dienste einerseits und für die Dienste nutzende Anwendungen andererseits ablaufen. Insbesondere ist ein Dienststeuerungsmanager vorgesehen, um eine Kommunikation zwischen einem Client-Stub innerhalb einer Client-Laufzeitumgebung und einem Dienst innerhalb einer Service-Laufzeitumgebung zu ermöglichen.

Aus EP 3 937 039 A1 ist ein Verfahren zur erweiterten Validierung eines Containerabbilds bekannt, das ein Basisabbild und mindestens eine Anwendungsschicht umfasst, die mindestens eine Änderungsoperation auf dem Basisabbild ausführt. Zunächst erfolgt ein Erzeugen einer eindeutigen kryptografischen Basis-Signatur über das Basisabbild durch eine Herstellervorrichtung eines Herstellers des Basisabbilds. Die Basis-Signatur wird an eine Container-Erzeugungsvorrichtung bereitgestellt. Außerdem wird in der Container-Erzeugungsvorrichtung ein Containerabbild erzeugt, das mindestens das Basisabbild und die Basis-Signatur umfasst. Das Containerabbild wird an einen Gastrechner bereitgestellt, und die Basis-Signatur im Containerabbild wird durch eine Laufzeitumgebung des Gastrechners überprüft. Das Containerabbild nur dann ausgeführt, wenn eine Überprüfung der Basis-Signatur ein positives Prüfergebnis ergibt.

Aufgrund einer zunehmend flexibleren funktionalen Ausgestaltung von industriellen Automatisierungsgeräten werden verstärkt in Automatisierungsgeräte nachladbare Steuerungsanwendungen genutzt. Diese Steuerungsanwendungen können beispielsweise mittels Container-Virtualisierung verfügbar gemacht werden. Insbesondere Steuerungsanwendungen zur Analyse von Datenverkehr innerhalb eines industriellen Automatisierungssystems oder zur Analyse von in Automatisierungsgeräten ablaufenden Steuerungsprozessen benötigen weitreichende Privilegien bzw. Sicherheitsberechtigungen. Ohne zusätzliche Schutzmaßnahmen kann eine Kompromittierung einer solchen Steuerungsanwendung gravierende Sicherheitsrisiken zumindest für das industrielle Automatisierungsgerät verursachen, auf dem eine kompromittierte Steuerungsanwendung installiert ist. Aus diesem Grund ist eine transparente und kontrollierte Verwendung von erhöhten Privilegien für Steuerungsanwendungen von entscheidender Bedeutung.

Bei einer Einräumung von erhöhten Privilegien an Steuerungsanwendungen ist problematisch, dass Verwendungszweck angeforderter erhöhter Privilegien sehr häufig nicht klar ist. Hierdurch wird insbesondere eine Kontrolle einer Einhaltung von Geräte-Sicherheitsrichtlinien deutlich erschwert. Darüber hinaus kann eine kompromittierte Steuerungsanwendung erhöhte Privilegien für einen Zweck missbrauchen, für den die Steuerungsanwendung originär gar nicht vorgesehen ist. Außerdem sind Privilegien einer Steuerungsanwendung üblicherweise an deren Lebenszyklus gebunden. Dies erfordert ein dauerhaftes Verwalten von an Steuerungsanwendungen eingeräumten Zugriffsberechtigungen für sicherheitskritische Schnittstellen. Eine solches Verwalten von Zugriffsberechtigungen ist jedoch aufwendig und fehleranfällig.

Der vorliegenden Erfindung liegt daher die Aufgabe zugrunde, ein Verfahren zur Bereitstellung von umfangreiche Sicherheitsberechtigungen erfordernden Steuerungsanwendungen zu schaffen, das eine nachvollziehbare und bedarfsgerechte Einräumung von Privilegien für die Steuerungsanwendungen gewährleistet, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 12 angegebenen Merkmalen gelöst. Vorteilhafte Weiterbildungen sind in den abhängigen Ansprüchen angegeben.

Entsprechend dem erfindungsgemäßen Verfahren zur Bereitstellung von Steuerungsanwendungen werden die Steuerungsanwendungen jeweils mittels Ablaufsteuerungskomponenten bereitgestellt, die in eine mittels einer Server-Einrichtung gebildete Ablaufsteuerungsumgebung geladen und dort ausgeführt wird. Insbesondere können die Ablaufsteuerungskomponenten Software-Container sein bzw. umfassen, die jeweils von anderen Software-Containern oder Container-Gruppen, z.B. Pods, isoliert innerhalb der Ablaufsteuerungsumgebung auf einem Host-Betriebssystem einer Server-Einrichtung ablaufen. Grundsätzlich können für die Ablaufsteuerungskomponenten auch alternative Micro-Virtualisierungskonzepte, wie Snaps, verwendet werden. Vorzugsweise nutzen die Software-Container jeweils gemeinsam mit anderen auf der jeweiligen Server-Einrichtung ablaufenden Software-Containern einen gemeinsamen Kernel des Host-Betriebssystems der Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Die Ablaufsteuerungsumgebung kann insbesondere eine Container-Laufzeitumgebung bzw. Container-Engine sein, durch die ein Anlegen, Löschen bzw. Verknüpfen von virtuellen Ressourcen erfolgt. Dabei umfassen die virtuellen Ressourcen Software-Container, virtuelle Kommunikationsnetze und diesen zugeordnete Verbindungen. Beispielsweise kann die Ablaufsteuerungsumgebung eine Docker Engine oder einen Snap Core umfassen, die bzw. der auf einer Server-Einrichtung abläuft. Grundsätzlich können auch andere (orchestrierte) Container-Laufzeitumgebungen, wie podman oder Kubernetes, verwendet werden.

Für Steuerungsanwendungen, deren Ausführung ausgewählte Privilegien erfordert, wird jeweils eine Spezifikation benötigter sicherheitskritischer Ressourcen erstellt. Anhand der Spezifikationen wird jeweils eine zusätzliche Ablaufsteuerungskomponente ermittelt, die für eine Bereitstellung eines Zugriffs auf die benötigten sicherheitskritischen Ressourcen vorgesehen ist. Die ermittelte zusätzliche Ablaufsteuerungskomponente wird in die Ablaufsteuerungsumgebung geladen, und eine Ausführung der jeweiligen Ablaufsteuerungskomponente wird gemeinsam mit der zusätzlichen Ablaufsteuerungskomponente gestartet.

Darüber hinaus wird durch die Ablaufsteuerungsumgebung erfindungsgemäß eine Schnittstelle zur Interprozesskommunikation zwischen der jeweiligen Ablaufsteuerungskomponente und der zusätzlichen Ablaufsteuerungskomponente eingerichtet. Dementsprechend wird der Zugriff auf die jeweils benötigten sicherheitskritischen Ressourcen mittels Interprozesskommunikation zwischen der jeweiligen Ablaufsteuerungskomponente und der zusätzlichen Ablaufsteuerungskomponente bereitgestellt.

Mit der vorliegenden Erfindung kann Steuerungsanwendungen zuverlässig, genau und effizient jeweils durch Bereitstellung zumindest einer zusätzlichen, passenden Ablaufsteuerungskomponente ein Zugriff auf sicherheitskritische Funktionen, Schnittstellen bzw. Ressourcen eingeräumt werden. Grundsätzlich kann pro sicherheitskritischer Funktion, Schnittstelle bzw. Ressource eine zusätzliche, dedizierte Ablaufsteuerungskomponente vorgesehen sein. Durch Verwendung zusätzlicher Ablaufsteuerungskomponenten entfällt insbesondere ein kompliziertes, sonst übliches Identifizieren eines API-Aufrufers (application programming interface) bzw. eines der jeweiligen Steuerungsanwendung zugeordneten Rechenprozesses.

Darüber hinaus bietet die vorliegende Erfindung gegenüber Token-basierten Ansätzen zur Einräumung von erhöhten Privilegien als Vorteil, dass über die zusätzliche Ablaufsteuerungskomponente eingeräumte Zugriffsrechte nicht ohne Weiteres durch andere Systemkomponenten oder durch potentielle Angreifer ermittelt werden können. Dagegen kann eine Anwendung mit weitreichenden Leserechten Zugriffstokens recht einfach auslesen und missbräuchlich verwenden. Vorteilhafterweise überwacht die zusätzliche Ablaufsteuerungskomponente hierzu, ob der Zugriff auf die jeweils benötigten sicherheitskritischen Ressourcen konform zu einer Sicherheitsrichtlinie angefordert bzw. bereitgestellt wird, die für die jeweilige Ablaufsteuerungskomponente bzw. für einen jeweiligen Host anzuwenden ist.

Erfindungsgemäß werden die Spezifikationen jeweils als Teil von Konfigurationsinformationen für die jeweilige Ablaufsteuerungskomponente erstellt. Die Konfigurationsinformationen umfassen jeweils zumindest eine Angabe eines Speicherabbilds für die jeweilige Ablaufsteuerungskomponente und anwendungsspezifische Vorgaben. Die Konfigurationsinformationen werden jeweils für das Laden bzw. die Ausführung der jeweiligen Ablaufsteuerungskomponente verwendet. Die Konfigurationsinformationen können Deployment-Informationen für Steuerungsanwendungen sein, beispielsweise docker-compose.yml-Konfigurationsdateien. Auf diese Weise können von Steuerungsanwendungen benötigte Zugriffsrechte auf sicherheitskritische Funktionen, Schnittstellen bzw. Ressourcen als Teil der jeweiligen Deployment-Information transparent gemacht werden.

Die Konfigurationsinformationen für die Ablaufsteuerungskomponenten werden gemäß einer weiteren Ausgestaltung der vorliegenden Erfindung jeweils entsprechend der jeweiligen Spezifikation ergänzt. Vorzugsweise werden die Konfigurationsinformationen durch eine der Ablaufsteuerungsumgebung zugeordnete Verwaltungskomponente ausgewertet und entsprechend den Spezifikationen ergänzt. Dabei akzeptiert die Ablaufsteuerungsumgebung ausschließlich durch die Verwaltungskomponente vorgenommene Ergänzungen der Konfigurationsinformationen, während anderweitig ergänzte Konfigurationsinformationen durch die Ablaufsteuerungsumgebung abgelehnt werden. Somit kann wirksam gewährleistet werden, dass sicherheitskritische Ressourcen bzw. Schnittstellen nur auf vorgesehene Art und Weise genutzt werden können.

Die Spezifikationen der benötigten sicherheitskritischen Ressourcen können darüber hinaus durch die Verwaltungskomponente jeweils gegen eine Geräte-spezifische Sicherheitsrichtlinie geprüft werden. In Abhängigkeit eines Prüfergebnisses werden die Konfigurationsinformationen für die jeweilige Ablaufsteuerungskomponente durch die Verwaltungskomponente angepasst. Auf diese Weise kann eine Verwendung sicherheitskritischer Ressourcen durch Anwendung einer Geräte-spezifische Sicherheitsrichtlinie unter Berücksichtigung individueller Rahmenbedingungen genau kontrolliert werden.

Eine Sicherheitsrichtlinie (Security Policy, auch Sicherheitspolitik) ist üblicherweise ein technisches bzw. organisatorisches Dokument, mit dem in Unternehmen oder Institutionen bestehende Sicherheitsansprüche umgesetzt und erreicht werden sollen. Kernbestandteile sind insbesondere eine Sicherstellung von Integrität, Vertraulichkeit, Verfügbarkeit bzw. Authentizität zu schützender Informationen. Eine Sicherheitsrichtlinie für eine Datagrammfilter-Komponente oder für eine Firewall legt beispielsweise fest, wie eine konkrete Konfiguration erfolgt, welche Zugriffsrechte erteilt werden, wie eine Protokollierung erfolgt oder welche Abwehrmaßnahmen die Datagrammfilter-Komponente oder Firewall in einem Angriffsszenario trifft. Eine Sicherheitsrichtlinie kann insbesondere als Konfigurationsdatei, als XML-Datei, als eine Gerätekonfiguration vorliegen, die unmittelbar maschinell auswertbar ist. Ebenso ist es möglich, dass eine Sicherheitsrichtlinie in textueller Form vorliegt, die mittels auf künstlicher Intelligenz oder maschinellem Lernen basierender Verfahren ausgewertet wird. Außerdem ist es möglich, dass eine Sicherheitsrichtlinie in graphischer Form vorliegt, die mittels Bildverarbeitungs- bzw. Mustererkennungsverfahren ausgewertet wird.

Vorzugsweise überwacht bzw. steuert die zusätzliche Ablaufsteuerungskomponente den Zugriff auf die jeweils benötigten sicherheitskritischen Ressourcen durch die jeweilige Ablaufsteuerungskomponente in Abhängigkeit von einer Sicherheitsrichtlinie, die für die jeweilige Ablaufsteuerungskomponente anzuwenden ist. Insbesondere lässt sich damit genau ermitteln, welche privilegierten Operationen eine Steuerungsanwendung tatsächlich durchführt. Die Sicherheitsrichtlinie kann beispielsweise jeweils aus der Spezifikation der benötigten sicherheitskritischen Ressourcen durch die zusätzliche Ablaufsteuerungskomponente oder eine der Ablaufsteuerungsumgebung zugeordnete Verwaltungskomponente einfach und zuverlässig abgeleitet werden. Darüber hinaus kann die Sicherheitsrichtlinie während der Ausführung der jeweiligen Ablaufsteuerungskomponente ereignisabhängig bzw. in Abhängigkeit von einem Administrator-Eingriff angepasst werden. Somit lässt sich eine Nutzung sicherheitskritischer Ressourcen noch genauer steuern.

Entsprechend einer besonders bevorzugten Ausführungsform der vorliegenden Erfindung sind mehrere zusätzliche Ablaufsteuerungskomponenten auf einem Host vorinstalliert, auf dessen Betriebssystem die Ablaufsteuerungsumgebung installiert ist. Auf diese kann eine Verwaltung des Zugriffs für die Steuerungsanwendungen auf die jeweils benötigten sicherheitskritischen Ressourcen deutlich vereinfacht werden. Insbesondere kann eine vorinstallierte zusätzliche Ablaufsteuerungskomponente einfach und zuverlässig an einen Lebenszyklus der Ablaufsteuerungskomponente der jeweiligen Steuerungsanwendung gekoppelt werden. Außerdem entfällt hierdurch eine getrennte Verwaltung der zusätzlichen Ablaufsteuerungskomponente und der jeweiligen Ablaufsteuerungskomponente. Eine getrennte Verwaltung gestaltet sich üblicherweise fehlerhaft und komplex.

Vorteilhafterweise wird die Schnittstelle zur Interprozesskommunikation zwischen der jeweiligen Ablaufsteuerungskomponente und der zusätzlichen Ablaufsteuerungskomponente durch das Betriebssystem des Hosts bereitgestellt. Demgegenüber greift die zusätzliche Ablaufsteuerungskomponente vorzugsweise über eine Host-Interprozesskommunikationsschnittstelle auf die für die jeweilige Ablaufsteuerungskomponente benötigten sicherheitskritischen Ressourcen zu. Auf diese Weise ist eine besonders sichere Steuerung des Zugriffs auf die sicherheitskritischen Ressourcen gewährleistet.

Das erfindungsgemäße System zur Bereitstellung von Steuerungsanwendungen ist zur Durchführung eines Verfahrens entsprechend vorangehenden Ausführungen vorgesehen und umfasst eine mittels einer Server-Einrichtung gebildete Ablaufsteuerungsumgebung sowie zumindest eine Ablaufsteuerungskomponente zur Bereitstellung einer Steuerungsanwendung. Dabei wird die Ablaufsteuerungskomponente in die Ablaufsteuerungsumgebung geladen und dort ausgeführt. Das System ist dafür eingerichtet, dass für Steuerungsanwendungen, deren Ausführung ausgewählte Privilegien erfordert, jeweils eine Spezifikation benötigter sicherheitskritischer Ressourcen erstellt. Außerdem ist das System dafür eingerichtet, dass anhand der Spezifikationen jeweils eine zusätzliche Ablaufsteuerungskomponente ermittelt wird, die für eine Bereitstellung eines Zugriffs auf die benötigten sicherheitskritischen Ressourcen vorgesehen ist.

Die Ablaufsteuerungsumgebung des erfindungsgemäßen Systems ist dafür eingerichtet, dass die ermittelte zusätzliche Ablaufsteuerungskomponente in die Ablaufsteuerungsumgebung geladen wird, dass eine Ausführung der jeweiligen Ablaufsteuerungskomponente gemeinsam mit der zusätzlichen Ablaufsteuerungskomponente gestartet wird und dass eine Schnittstelle zur Interprozesskommunikation zwischen der jeweiligen Ablaufsteuerungskomponente und der zusätzlichen Ablaufsteuerungskomponente eingerichtet wird. Ferner ist das System dafür eingerichtet, dass der Zugriff auf die jeweils benötigten sicherheitskritischen Ressourcen mittels Interprozesskommunikation zwischen der jeweiligen Ablaufsteuerungskomponente und der zusätzlichen Ablaufsteuerungskomponente bereitgestellt wird.

Die vorliegende Erfindung wird nachfolgend an einem Ausführungsbeispiel anhand der Zeichnung näher erläutert. Es zeigt
- Figur 1: ein System zur Bereitstellung von Steuerungsanwendungen, die ausgewählte Sicherheitsberechtigungen erfordern,
- Figur 2: eine Darstellung eines Verfahrensablaufs zur Bereitstellung von Steuerungsanwendungen mittels des in Figur 1 dargestellten Systems.

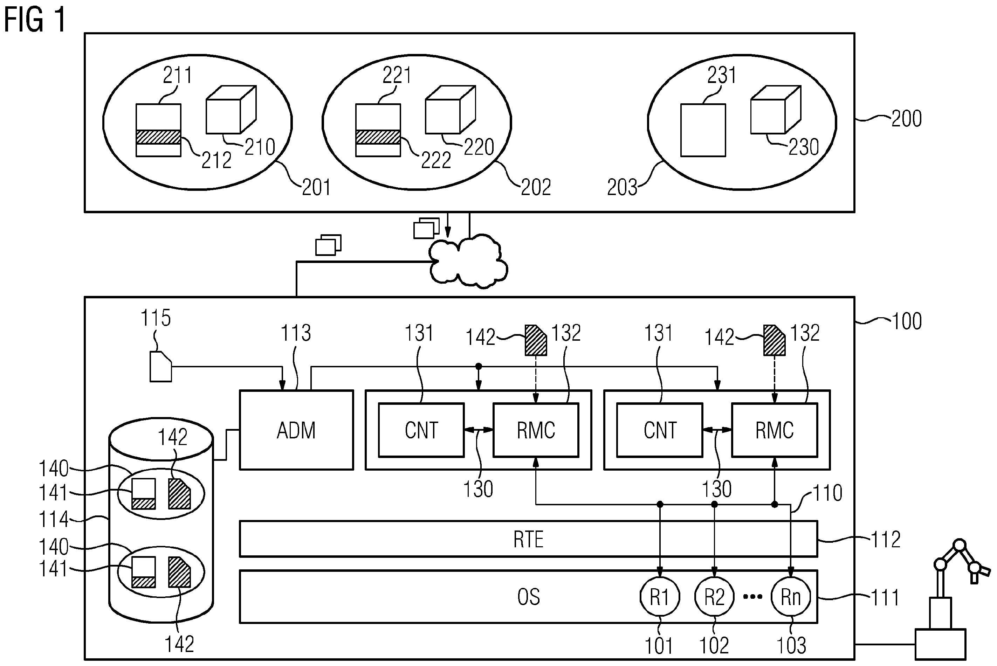

Das in Figur 1 dargestellte System umfasst einen Host 100 zur Bereitstellung von Steuerungsanwendungen eines industriellen Automatisierungssystems mittels Ablaufsteuerungskomponenten 131, die im vorliegenden Ausführungsbeispiel durch Software-Container implementiert sind. Die Steuerungsanwendungen des industriellen Automatisierungssystems sind exemplarisch für zeitkritische Dienste und können auch Überwachungsfunktionen umfassen.

Der Host 100 kann mittels der Steuerungsanwendungen beispielsweise Funktionen von Steuerungsgeräten eines industriellen Automatisierungssystems, wie speicherprogrammierbaren Steuerungen, oder von Feldgeräten, wie Sensoren oder Aktoren, implementieren. Auf diese Weise kann der Host 100 insbesondere für einen Austausch von Steuerungs- und Messgrößen mit durch den Host 100 gesteuerten Maschinen oder Vorrichtungen genutzt werden. Dabei kann der Host 100 aus erfassten Messgrößen geeignete Steuerungsgrößen für die Maschinen oder Vorrichtungen ermitteln.

Alternativ oder zusätzlich kann der Host 100 mittels der Steuerungsanwendungen Funktionen einer Bedien- und Beobachtungsstation implementieren und somit zur Visualisierung von Prozessdaten bzw. Mess- und Steuerungsgrößen genutzt werden, die durch Automatisierungsgeräte verarbeitet bzw. erfasst werden. Insbesondere kann der Host 100 zur Anzeige von Werten eines Regelungskreises und zur Veränderung von Regelungsparametern oder -programmen verwendet werden.

Außerdem umfasst das in Figur 1 dargestellte System ein Management-System 200, mittels dessen Anwendungspakete 201-203 für Steuerungsanwendungen bereitgestellt werden. Die Anwendungspakete 201-203 umfassen jeweils zumindest ein Speicherabbild (Image) 210, 220, 230 für einen Software-Container sowie zugehörige Konfigurationsinformationen 211, 221, 231 und werden insbesondere für den Host 100 bereitgestellt. Die Konfigurationsinformationen können Deployment-Informationen sein, beispielsweise docker-compose.yml-Konfigurationsdateien. Insbesondere umfassen die Konfigurationsinformationen 211, 221, 231 jeweils zumindest eine Angabe eines Speicherabbilds für den jeweiligen Software-Container und anwendungsspezifische Vorgaben. Die Konfigurationsinformationen 211, 221, 231 werden jeweils für ein Laden bzw. eine Ausführung des jeweiligen Software-Containers verwendet.

Für Steuerungsanwendungen, deren Ausführung ausgewählte Privilegien erfordert, umfassen die Konfigurationsinformationen 211, 221 jeweils eine Spezifikation 212, 222 benötigter sicherheitskritischer Ressourcen 101-103. Folgender Ausschnitt aus einer docker-compose.yml-Konfigurationsdatei zeigt beispielhaft eine Spezifikation eines Read-only-Zugriffs auf einen Docker-Socket unter Nutzung von Labels bzw. Key-Value-Paaren, die im folgenden Ausschnitt fett dargestellt sind:
*services:*
*my-app-service:*
*image: my-app-image:latest*
*build:*
   *context:* .
*labels:*
   - *"com.my-app-service.description=My service app"*
   - ***"com.my-app-service.host-interfaces.docker-socket-mode=read-only"***
   - ***"com-my-app-service.host-interfaces.docker-socket-endpoints=containers"***
      ...

Auf einem Betriebssystem 111 des Hosts 100 ist eine Ablaufsteuerungsumgebung 112 als Betriebssystem-Anwendung installiert. Die Software-Container bzw. Ablaufsteuerungskomponenten 131 können in diese Ablaufsteuerungsumgebung 112 geladen und dort ausgeführt werden. Grundsätzlich können Ablaufsteuerungskomponenten 131 jeweils vom Host 100 auf einen anderen Host zur dortigen Ausführung migriert bzw. auf anderen Hosts zeitgleich ausgeführt werden.

Im vorliegenden Ausführungsbeispiel laufen die Software-Container jeweils von anderen Software-Containern, Container-Gruppen bzw. Pods isoliert innerhalb der Ablaufsteuerungsumgebung 112 auf dem Betriebssystem 111 des Hosts 100 ab. Dabei nutzen die Software-Container jeweils gemeinsam mit anderen auf dem Host 100 ablaufenden Software-Containern einen bzw. denselben Kernel des Betriebssystems 111. Die Ablaufsteuerungsumgebung 112 ist vorzugsweise eine Container-Laufzeitumgebung bzw. Container-Engine.

Eine Isolation der Software-Container bzw. eine Isolation von ausgewählten Betriebssystemmitteln untereinander kann insbesondere mittels Control Groups und Namespaces realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden, indem Ressourcen des Kernels des Betriebssystems virtualisiert werden.

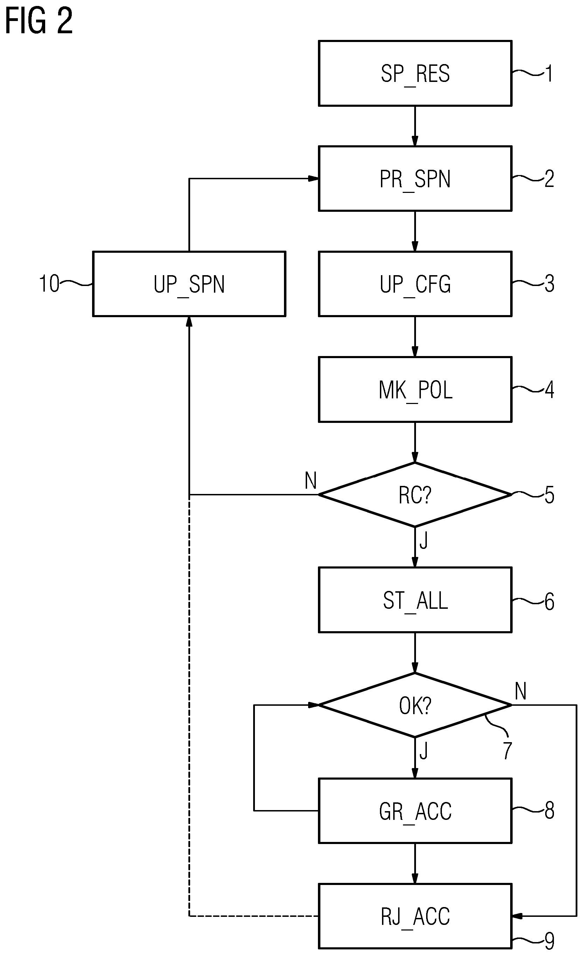

Zur Bereitstellung von Steuerungsanwendungen, die ausgewählte Sicherheitsberechtigungen erfordern, wird für diese Steuerungsanwendungen entsprechend Schritt 1 des in Figur 2 dargestellten Verfahrensablaufs jeweils eine Spezifikation 212, 222 der benötigten sicherheitskritischen Ressourcen 101-103 als Teil der Konfigurationsinformationen 211, 221 erstellt. Die Konfigurationsinformationen 211, 221 werden durch eine der Ablaufsteuerungsumgebung 112 zugeordnete Verwaltungskomponente 113 ausgewertet (Schritt 2) und entsprechend vorhandenen Spezifikationen 212, 222 ergänzt (Schritt 3). Dabei werden die Spezifikationen 212, 222 der benötigten sicherheitskritischen Ressourcen 101-103 durch die Verwaltungskomponente 113 im vorliegenden Ausführungsbeispiel jeweils auch gegen eine Geräte-spezifische, kryptographisch geschützte Sicherheitsrichtlinie 115 geprüft. In Abhängigkeit eines Prüfergebnisses passt die Verwaltungskomponente 113 die Konfigurationsinformationen 211, 221 für die jeweilige Ablaufsteuerungskomponente 131 an.

Vorzugsweise speichert die Verwaltungskomponente 113 die ergänzten bzw. angepassten Konfigurationsinformationen 141 in einem lokalen Speicher 114 mit Anwendungsdaten 140 ab. Diese Anwendungsdaten 140 umfassen neben den angepassten Konfigurationsinformationen 141 jeweils auch eine Sicherheitsrichtlinie 142, die zur Überwachung bzw. Steuerung des Zugriffs auf die sicherheitskritischen Ressourcen 101-103 für die jeweilige Ablaufsteuerungskomponente 131 anzuwenden ist. Die Sicherheitsrichtlinien 142 werden im vorliegenden Ausführungsbeispiel entsprechend Schritt 4 des in Figur 2 dargestellten Verfahrensablaufs durch die Verwaltungskomponente 113 aus der jeweiligen Spezifikation 212, 222 der benötigten sicherheitskritischen Ressourcen 101-103 abgeleitet und vorteilhafterweise kryptographisch geschützt.

Folgender Ausschnitt aus einer docker-compose.yml-Konfigurationsdatei zeigt gegenüber obigem Ausschnitt durch die Verwaltungskomponente 113 vorgenommene Anpassungen, die im folgenden Ausschnitt fett dargestellt sind:

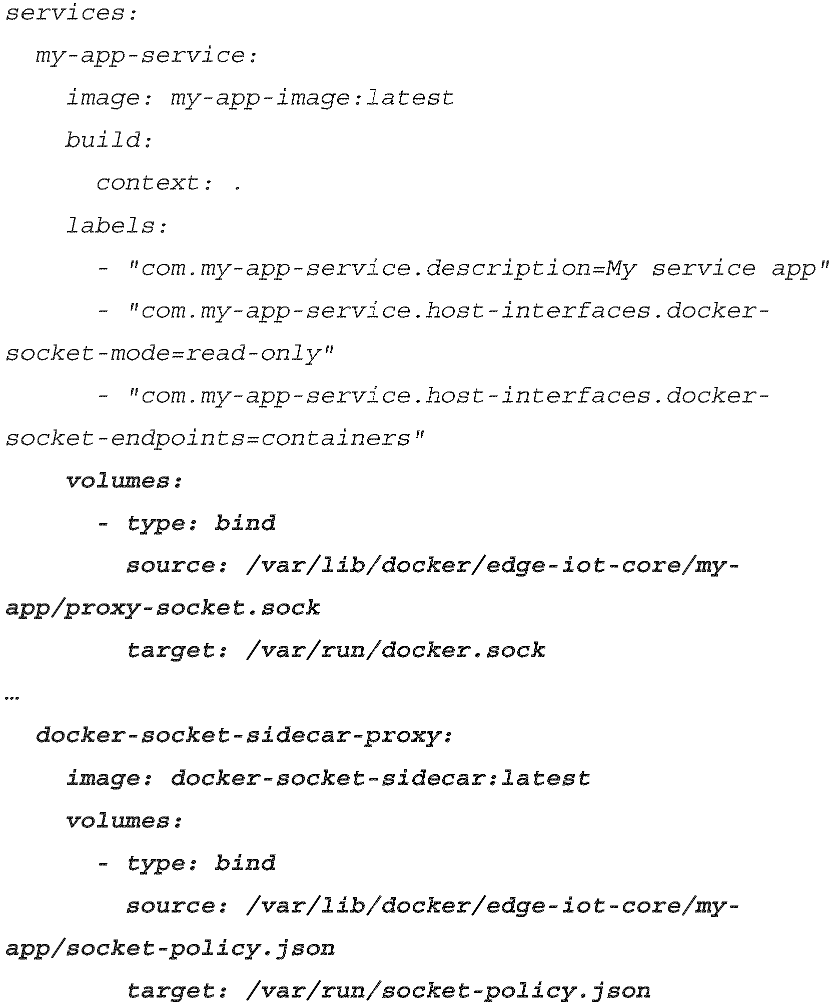

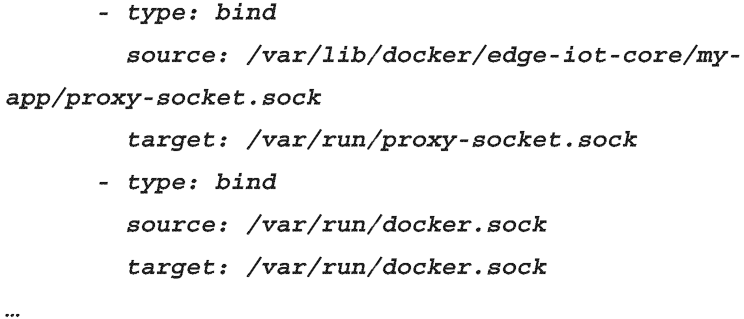

Obiges Beispiel für durch die Verwaltungskomponente 113 angepasste Konfigurationsinformationen 141 zeigt einen hinzugefügten Dienst (docker-socket-sidecar-proxy), der Zugriff auf eine durch Verwaltungskomponente 113 abgeleitete und erzeugte anwendungsspezifische Sicherheitsrichtlinie 142 (socket-policy.json), auf einen lokale Interprozesskommunikationsschnittstelle (Unix Domain Socket proxy-socket.sock) sowie auf eine Host-Interprozesskommunikationsschnittstelle (API Socket von Docker Daemon docker.sock) besitzt. Für den Software-Container (my-app-service) der Steuerungsanwendung selbst wird nur ein Zugriff auf die lokale Interprozesskommunikationsschnittstelle eingeräumt.

Entsprechend bisherigen Service-Mesh-Lösungen, wie Istio, wird ein Sidecar-Container vor einen Workload-Container geschaltet, und Routen zum Workload-Container werden beispielsweise per IPtables über den Sidecar-Container umgeleitet. Im Gegensatz dazu wird im vorliegenden Ausführungsbeispiel jedem einzelnen Software-Container eine eigene Interprozesskommunikationsschnittstelle, beispielweise eine Unix Domain Socket, eine eigene Netzwerkschnittstelle oder ein eigenes Shared Memory Segment, zur Verfügung gestellt. Insbesondere erfolgt im vorliegenden Ausführungsbeispiel kein Teilen eines Netzwerk-Namespace bzw. kein Operieren auf derselben Netzwerkschnittstelle.

Eine Spezifikation von Privilegen kann entsprechend obigem Beispiel mittels Key-Value-Paaren in Form von Labels umgesetzt werden. Alternativ dazu ist beispielsweise auch eine Verwendung einer dedizierten Manifest-Datei, eine Bereitstellung einer API bzw. eine Bereitstellung von Einstellungsoptionen für einen Anwender möglich. Auf diese Weise kann der Anwender die Privilegien auch nach Installation einer Steuerungsanwendung anpassen.

Vorzugsweise ist die Ablaufsteuerungsumgebung 112 derart konfiguriert, dass sie ausschließlich durch die Verwaltungskomponente 113 vorgenommene Anpassungen der Konfigurationsinformationen 211, 221 akzeptiert. Anderweitig angepasste Konfigurationsinformationen werden durch die Ablaufsteuerungsumgebung 112 abgelehnt.

Anhand der Spezifikationen 212, 222 bzw. anhand der angepassten Konfigurationsinformationen 141 wird entsprechend Schritt 5 des in Figur 2 dargestellten Verfahrensablaufs eine zusätzliche, auf dem Host 100 vorinstallierte Ablaufsteuerungskomponente 132 ermittelt, die für eine Bereitstellung des Zugriffs auf die benötigten sicherheitskritischen Ressourcen 101-103 vorgesehen ist. Kann keine passende zusätzliche Ablaufsteuerungskomponente 132 unter mehreren auf dem Host 100 vorinstallierten zusätzlichen Ablaufsteuerungskomponenten ermittelt werden, erfolgt im vorliegenden Ausführungsbeispiel entsprechend Schritt 10 eine Anpassung der Spezifikationen 212, 222 sowie eine erneute Auswertung (Schritt 2) der Konfigurationsinformationen 211, 221 durch die Verwaltungskomponente 113. Alternativ kann eine Ausführung der jeweiligen Steuerungsanwendung abgebrochen werden, wenn eine angeforderte Ressource nicht auf sichere Art und Weise bereitgestellt werden kann.

Entsprechend Schritt 6 des in Figur 2 dargestellten Verfahrensablaufs wird die ermittelte zusätzliche Ablaufsteuerungskomponente 132 in die Ablaufsteuerungsumgebung 112 geladen, und es wird eine Ausführung der jeweiligen Ablaufsteuerungskomponente 131 gemeinsam mit der zusätzlichen Ablaufsteuerungskomponente 132 gestartet. Dabei wird durch die Ablaufsteuerungsumgebung 112 eine Schnittstelle 130 zur Interprozesskommunikation zwischen der jeweiligen Ablaufsteuerungskomponente 131 und der zusätzlichen Ablaufsteuerungskomponente 132 eingerichtet. Der Zugriff auf die jeweils benötigten sicherheitskritischen Ressourcen 101-103 wird mittels Interprozesskommunikation zwischen der jeweiligen Ablaufsteuerungskomponente 131 und der zusätzlichen Ablaufsteuerungskomponente 132 bereitgestellt.

Die Schnittstelle 130 zur Interprozesskommunikation zwischen der jeweiligen Ablaufsteuerungskomponente 131 und der zusätzlichen Ablaufsteuerungskomponente 132 wird im vorliegenden Ausführungsbeispiel durch das Betriebssystem 111 des Hosts 100 bereitgestellt. Dagegen greift die zusätzliche Ablaufsteuerungskomponente 132 über eine Host-Interprozesskommunikationsschnittstelle 110 auf die für die jeweilige Ablaufsteuerungskomponente 131 benötigten sicherheitskritischen Ressourcen 101-103 zu. Wenn es sich um eine Systemdatei handelt, kann die zusätzliche Ablaufsteuerungskomponente 132 direkt auf eine solche Ressource zugreifen.

Die zusätzliche Ablaufsteuerungskomponente 132 überwacht bzw. steuert den Zugriff auf die jeweils benötigten sicherheitskritischen Ressourcen 101-103 durch die jeweilige Ablaufsteuerungskomponente 131 entsprechend Schritt 7 des in Figur 2 dargestellten Verfahrensablaufs in Abhängigkeit von der Sicherheitsrichtlinie 142, die für die jeweilige Ablaufsteuerungskomponente 131 anzuwenden ist. Dementsprechend wird ein Zugriff auf die sicherheitskritischen Ressourcen 101-103 eingeräumt (Schritt 8) oder abgelehnt (Schritt 9). Dabei können die Sicherheitsrichtlinien 142 während der Ausführung der jeweiligen Ablaufsteuerungskomponente 131 ereignisabhängig bzw. in Abhängigkeit von einem Administrator-Eingriff angepasst wird. Darüber hinaus können bei einer Ablehnung des Zugriffs auf die sicherheitskritischen Ressourcen 101-103 grundsätzlich eine Anpassung der Spezifikationen 212, 222 (Schritt 10) sowie eine erneute Auswertung (Schritt 2) der Konfigurationsinformationen 211, 221 durch die Verwaltungskomponente 113 erfolgen. Bei Ablehnung eines Zugriffs kann alternativ hierzu ein entsprechender Log-Eintrag erstellt und die jeweilige Steuerungsanwendung beendet werden, insbesondere wenn die Steuerungsanwendung versucht, ihre Privilegien zu missbrauchen.

Alternativ zu einer Ableitung der Sicherheitsrichtlinien 142 durch die Verwaltungskomponente 113 können die Sicherheitsrichtlinien 142 auch durch die jeweilige zusätzliche Ablaufsteuerungskomponente 132 aus der Spezifikation 212, 222 der benötigten sicherheitskritischen Ressourcen 101-103 abgeleitet werden. Dies ist insbesondere dann möglich, wenn ausschließlich vorinstallierte, kryptographisch gesicherte zusätzliche Ablaufsteuerungskomponenten 132 verwendet werden.

Darüber hinaus können die zusätzliche Ablaufsteuerungskomponenten 132 zur Überwachung, insbesondere zur Protokollierung, genutzt werden, ob der Zugriff auf die jeweils benötigten sicherheitskritischen Ressourcen 101-103 konform zu einer Sicherheitsrichtlinie 115, 142 angefordert bzw. bereitgestellt wird, die für die jeweilige Ablaufsteuerungskomponente 131 bzw. für einen jeweiligen Host 100 anzuwenden ist. Entsprechend einem weiteren Ausführungsbeispiel können die zusätzlichen Ablaufsteuerungskomponenten 132 in einem Lernmodus protokollieren, auf welche Ressourcen Zugriffe angefordert werden. Auf diese Weise kann eine Sicherheitsrichtlinie 142 erstellt werden, die nach Beendigung des Lernmodus operativ genutzt wird.

## Patentansprüche

1. Verfahren zur Bereitstellung von Steuerungsanwendungen, bei dem
- die Steuerungsanwendungen jeweils mittels Ablaufsteuerungskomponenten (131) bereitgestellt werden, die in eine mittels einer Server-Einrichtung (100) gebildete Ablaufsteuerungsumgebung (112) geladen und dort ausgeführt wird,
- für Steuerungsanwendungen, deren Ausführung ausgewählte Privilegien erfordert, jeweils eine Spezifikation (212, 222) benötigter sicherheitskritischer Ressourcen (101-103) erstellt wird,
- eine zusätzliche Ablaufsteuerungskomponente in die Ablaufsteuerungsumgebung geladen wird,
- eine Ausführung der jeweiligen Ablaufsteuerungskomponente gemeinsam mit der zusätzlichen Ablaufsteuerungskomponente gestartet wird,
- durch die Ablaufsteuerungsumgebung eine Schnittstelle (130) zur Interprozesskommunikation zwischen der jeweiligen Ablaufsteuerungskomponente und der zusätzlichen Ablaufsteuerungskomponente eingerichtet wird,
- der Zugriff auf die jeweils benötigten sicherheitskritischen Ressourcen mittels Interprozesskommunikation zwischen der jeweiligen Ablaufsteuerungskomponente und der zusätzlichen Ablaufsteuerungskomponente bereitgestellt wird,
**dadurch gekennzeichnet, dass**
- anhand der Spezifikationen jeweils die zusätzliche Ablaufsteuerungskomponente (132) ermittelt wird, die für eine Bereitstellung eines Zugriffs auf die benötigten sicherheitskritischen Ressourcen vorgesehen ist,
- die Spezifikationen (212, 222) jeweils als Teil von Konfigurationsinformationen (211, 221) für die jeweilige Ablaufsteuerungskomponente erstellt werden,
- die Konfigurationsinformationen jeweils zumindest eine Angabe eines Speicherabbilds (210, 230) für die jeweilige Ablaufsteuerungskomponente und anwendungsspezifische Vorgaben umfassen und jeweils für das Laden und/oder die Ausführung der jeweiligen Ablaufsteuerungskomponente verwendet werden.

2. Verfahren nach Anspruch 1,
bei dem die Konfigurationsinformationen (211, 221) für die Ablaufsteuerungskomponenten (131) jeweils anhand der jeweiligen Spezifikation (212, 222) ergänzt werden.

3. Verfahren nach einem der Ansprüche 1 oder 2,
bei dem die Konfigurationsinformationen (211, 221, 231) durch eine der Ablaufsteuerungsumgebung (112) zugeordnete Verwaltungskomponente (113) ausgewertet und entsprechend den Spezifikationen (212, 222) ergänzt werden, bei dem die Ablaufsteuerungsumgebung ausschließlich durch die Verwaltungskomponente vorgenommene Ergänzungen der Konfigurationsinformationen akzeptiert und bei dem anderweitig ergänzte Konfigurationsinformationen durch die Ablaufsteuerungsumgebung abgelehnt werden.

4. Verfahren nach Anspruch 3,
bei dem die Spezifikationen (212, 222) der benötigten sicherheitskritischen Ressourcen (101-103) durch die Verwaltungskomponente (113) jeweils gegen eine Geräte-spezifische Sicherheitsrichtlinie (115) geprüft werden und bei dem die Konfigurationsinformationen (211, 221) für die jeweilige Ablaufsteuerungskomponente (131) durch die Verwaltungskomponente in Abhängigkeit eines Prüfergebnisses angepasst werden.

5. Verfahren nach einem der Ansprüche 1 bis 4,
bei dem die zusätzliche Ablaufsteuerungskomponente (132) den Zugriff auf die jeweils benötigten sicherheitskritischen Ressourcen (101-103) durch die jeweilige Ablaufsteuerungskomponente (131) in Abhängigkeit von einer Sicherheitsrichtlinie (142) überwacht und/oder steuert, die für die jeweilige Ablaufsteuerungskomponente anzuwenden ist.

6. Verfahren nach Anspruch 5,
bei dem die Sicherheitsrichtlinie (142) jeweils aus der Spezifikation (212, 222) der benötigten sicherheitskritischen Ressourcen (101-103) durch die zusätzliche Ablaufsteuerungskomponente (132) oder eine der Ablaufsteuerungsumgebung (112) zugeordnete Verwaltungskomponente (113) abgeleitet wird.

7. Verfahren nach einem der Ansprüche 5 oder 6,
bei dem die Sicherheitsrichtlinie (142) während der Ausführung der jeweiligen Ablaufsteuerungskomponente (131) ereignisabhängig und/oder in Abhängigkeit von einem Administrator-Eingriff angepasst wird.

8. Verfahren nach einem der Ansprüche 1 bis 7,
bei dem mehrere zusätzliche Ablaufsteuerungskomponenten (132) auf einem Host vorinstalliert (100) sind, auf dessen Betriebssystem (111) die Ablaufsteuerungsumgebung (112) installiert ist.

9. Verfahren nach Anspruch 8,
bei dem die Schnittstelle (130) zur Interprozesskommunikation zwischen der jeweiligen Ablaufsteuerungskomponente (131) und der zusätzlichen Ablaufsteuerungskomponente (132) durch das Betriebssystem (111) des Hosts (100) bereitgestellt wird und bei dem die zusätzliche Ablaufsteuerungskomponente über eine Host-Interprozesskommunikationsschnittstelle (110) auf die für die jeweilige Ablaufsteuerungskomponente benötigten sicherheitskritischen Ressourcen (101-103) zugreift.

10. Verfahren nach einem der Ansprüche 1 bis 9,
bei dem die zusätzliche Ablaufsteuerungskomponente (132) überwacht, ob der Zugriff auf die jeweils benötigten sicherheitskritischen Ressourcen (101-103) konform zu einer Sicherheitsrichtlinie (115, 142) angefordert und/oder bereitgestellt wird, die für jeweilige Ablaufsteuerungskomponente (131) und/oder für einen jeweiligen Host (100) anzuwenden ist.

11. Verfahren nach einem der Ansprüche 1 bis 10,
bei dem die Ablaufsteuerungskomponenten (131, 132) Software-Container sind und bei dem die Ablaufsteuerungsumgebung (112) eine Container-Laufzeitumgebung ist.

12. System zur Bereitstellung von Steuerungsanwendungen mit
- einer mittels einer Server-Einrichtung (100) gebildeten Ablaufsteuerungsumgebung (112),
- zumindest einer Ablaufsteuerungskomponente (131) zur Bereitstellung einer Steuerungsanwendung, wobei die Ablaufsteuerungskomponente in die Ablaufsteuerungsumgebung (112) geladen und dort ausgeführt wird,
- wobei das System dafür eingerichtet ist, dass für Steuerungsanwendungen, deren Ausführung ausgewählte Privilegien erfordert, jeweils eine Spezifikation (212, 222) benötigter sicherheitskritischer Ressourcen (101-103) erstellt wird und dass
- anhand der Spezifikationen jeweils eine zusätzliche Ablaufsteuerungskomponente ermittelt (132) wird, die für eine Bereitstellung eines Zugriffs auf die benötigten sicherheitskritischen Ressourcen vorgesehen ist, wobei die Spezifikationen (212, 222) jeweils als Teil von Konfigurationsinformationen (211, 221), die jeweils zumindest eine Angabe eines Speicherabbilds (210, 230) für die jeweilige Ablaufsteuerungskomponente und anwendungsspezifische Vorgaben umfassen und jeweils für das Laden und/oder die Ausführung der jeweiligen Ablaufsteuerungskomponente verwendet werden, für die jeweilige Ablaufsteuerungskomponente erstellt werden,
- wobei die Ablaufsteuerungsumgebung (112) dafür eingerichtet ist, dass die ermittelte zusätzliche Ablaufsteuerungskomponente in die Ablaufsteuerungsumgebung geladen wird, dass
- eine Ausführung der jeweiligen Ablaufsteuerungskomponente gemeinsam mit der zusätzlichen Ablaufsteuerungskomponente gestartet wird und dass
- eine Schnittstelle (130) zur Interprozesskommunikation zwischen der jeweiligen Ablaufsteuerungskomponente und der zusätzlichen Ablaufsteuerungskomponente eingerichtet wird,
- wobei das System ferner dafür eingerichtet ist, dass der Zugriff auf die jeweils benötigten sicherheitskritischen Ressourcen mittels Interprozesskommunikation zwischen der jeweiligen Ablaufsteuerungskomponente und der zusätzlichen Ablaufsteuerungskomponente bereitgestellt wird.

## Claims

1. Method for providing control applications, in which
- the control applications are provided in each case by means of sequence control components (131) which are loaded into a sequence control environment (112) formed by a server entity (100) and executed there,
- a specification (212, 222) of required security-critical resources (101-103) is established in each case for control applications whose execution demands selected privileges,
- an additional sequence control component is loaded into the sequence control environment,
- execution of both the respective sequence control component and the additional sequence control component is started,
- an interface (130) for interprocess communication between the respective sequence control component and the additional sequence control component is set up by means of the sequence control environment,
- the access to the security-critical resources that are required in each case is provided by means of interprocess communication between the respective sequence control component and the additional sequence control component,
**characterised in that**
- the additional sequence control component (132) is determined on the basis of the specifications in each case and is used for the purpose of providing access to the required security-critical resources,
- the specifications (212, 222) are established in each case as part of configuration information (211, 221) for the respective sequence control component,
- the configuration information comprises in each case at least a designation of a memory image (210, 230) for the respective sequence control component and application-specific entries, and is used in each case for the purpose of loading and/or executing the respective sequence control component.

2. Method according to claim 1,
in which the configuration information (211, 221) for the sequence control components (131) is extended on the basis of the respective specification (212, 222) in each case.

3. Method according to one of claims 1 or 2,
in which the configuration information (211, 221, 231) is evaluated by a management component (113) assigned to the sequence control environment (112) and is extended according to the specifications (212, 222), in which the sequence control environment only accepts extensions to the configuration information that are made by the management component, and in which configuration information that has been extended by other means is rejected by the sequence control environment.

4. Method according to claim 3,
in which the specifications (212, 222) of the required security-critical resources (101-103) are checked in each case by the management component (113) against a device-specific security policy (115) and in which the configuration information (211, 221) for the respective sequence control component (131) is adapted by the management component as a function of a check result.

5. Method according to one of claims 1 to 4,
in which the additional sequence control component (132) monitors and/or controls the access by the respective sequence control component (131) to the security-critical resources (101-103) that are required in each case, as a function of a security policy (142) which must be applied for the respective sequence control component.

6. Method according to claim 5,
in which the security policy (142) is derived by the additional sequence control component (132) or by a management component (113) assigned to the sequence control environment (112) from the specification (212, 222) of the required security-critical resources (101-103) in each case.

7. Method according to one of claims 5 or 6,
in which the security policy (142) is adapted during the execution of the respective sequence control component (131) in an event-dependent manner and/or as a function of an administrator intervention.

8. Method according to one of claims 1 to 7,
in which a plurality of additional sequence control components (132) are preinstalled on a host (100) on whose operating system (111) the sequence control environment (112) is installed.

9. Method according to claim 8,
in which the interface (130) for interprocess communication between the respective sequence control component (131) and the additional sequence control component (132) is provided by the operating system (111) of the host (100) and in which the additional sequence control component accesses the security-critical resources (101-103) that are required for the respective sequence control component via a host interprocess communication interface (110).

10. Method according to one of claims 1 to 9,
in which the additional sequence control component (132) monitors whether the access to the security-critical resources (101-103) that are required in each case is requested and/or provided in compliance with a security policy (115, 142) which must be applied for the respective sequence control component (131) and/or for a respective host (100).

11. Method according to one of claims 1 to 10,
in which the sequence control components (131, 132) are software containers and in which the sequence control environment (112) is a container runtime environment.

12. System for providing control applications, comprising
- a sequence control environment (112) which is formed by a server entity (100),
- at least one sequence control component (131) for providing a control application, wherein the sequence control component can be loaded into the sequence control environment (112) and executed there,
- wherein the system is set up such that a specification (212, 222) of required security-critical resources (101-103) is established in each case for control applications whose execution demands selected privileges, and such that
- on the basis of the specifications, an additional sequence control component (132) is determined in each case for the purpose of providing access to the required security-critical resources, wherein the specifications (212, 222) are established in each case as part of configuration information (211, 221), which comprises in each case at least a designation of a memory image (210, 230) for the respective sequence control component and application-specific entries and is used in each case for the purpose of loading and/or executing the respective sequence control component, for the respective sequence control component,
- wherein the sequence control environment (112) is set up such that the determined additional sequence control component is loaded into the sequence control environment, such that
- execution of both the respective sequence control component and the additional sequence control component is started, and such that
- an interface (130) for interprocess communication between the respective sequence control component and the additional sequence control component is set up,
- wherein the system is moreover set up such that the access to the security-critical resources that are required in each case is provided by means of interprocess communication between the respective sequence control component and the additional sequence control component.

## Revendications

1. Procédé de mise à disposition d'applications de commande, dans lequel
- on met à disposition les applications de commande respectivement au moyen de composants (131) de commande de déroulement, qui sont chargés dans un environnement (112) de commande de déroulement formé au moyen d'un dispositif (100) serveur et y sont exécutés,
- pour des applications de commande, dont l'exécution exige des privilèges sélectionnés, on établit respectivement une spécification (212, 222) de ressources (101-103) nécessaires critiques du point de vue de la sécurité,
- on charge un composant de déroulement supplémentaire dans l'environnement de commande de déroulement,
- on fait commencer une exécution du composant de commande de déroulement respectif conjointement avec le composant de commande de déroulement supplémentaire,
- par l'environnement de commande de déroulement, on agence une interface (130) de communication d'interprocessus entre le composant de commande de déroulement respectif et le composant de commande de déroulement supplémentaire,
- on met à disposition l'accès aux ressources nécessaires respectivement critiques du point de vue de la sécurité au moyen d'une communication interprocessus entre le composant de commande de déroulement respectif et le composant de commande de déroulement supplémentaire,
**caractérisé en ce que**,
- à l'aide des spécifications, on détermine respectivement le composant (132) de commande de déroulement, qui est prévu pour une mise à disposition d'un accès aux ressources nécessaires critiques du point de vue de la sécurité,
- on établit les spécifications (212, 222) respectivement comme partie d'informations (211, 221) de configuration pour les composants de commande de déroulement respectifs,
- les informations de configuration comprennent respectivement au moins une indication d'une représentation (210, 230) en mémoire du composant de déroulement respectif et des règles spécifiques à l'application et on les utilise respectivement pour le chargement et/ou l'exécution des composants de commande de déroulement respectifs.

2. Procédé suivant la revendication 1,
dans lequel on complète les informations (211, 221) de configuration pour les composants (131) de commande de déroulement respectivement à l'aide de la spécification (212, 222) respective.

3. Procédé suivant l'une des revendications 1 ou 2,
dans lequel on évalue les informations (211, 221, 231) de configuration par un composant (113) de gestion affecté à l'environnement (112) de commande de déroulement et on complète en conséquence les spécifications (212, 222), dans lequel l'environnement de commande de déroulement accepte des compléments des informations de configuration effectués exclusivement par le composant de gestion et dans lequel des informations de configuration complétées d'une autre façon sont négligées par l'environnement de commande de déroulement.

4. Procédé suivant la revendication 3,
dans lequel on contrôle les spécifications (212, 222) des ressources (101-103) nécessaires critiques du point de vue de la sécurité par le composant (113) de gestion respectivement selon une directive (115) de sécurité spécifique à des appareils et dans lequel on adapte par le composant de gestion en fonction du résultat du contrôle, des informations (211, 221) de configuration pour le composant (131) de commande de déroulement respectif.

5. Procédé suivant l'une des revendications 1 à 4,
dans lequel le composant (132) de commande de déroulement supplémentaire contrôle et/ou commande l'accès aux ressources (101-103) nécessaires respectivement critiques du point de vue de la sécurité par le composant (131) de commande de déroulement respectif en fonction d'une directive (142) de sécurité, qui est appliquée au composant de commande de déroulement respectif.

6. Procédé suivant la revendication 5,
dans lequel on déduit, par le composant (132) de commande de déroulement supplémentaire ou par un composant (113) de gestion affecté à l'environnement (112) de commande de déroulement, la directive (142) de sécurité respectivement de la spécification (212, 222) des ressources (101-103) nécessaires critiques du point de vue de la sécurité.

7. Procédé suivant l'une des revendications 5 ou 6,
dans lequel on adapte, en fonction d'évènements et/ou en fonction d'une intervention d'administrateur, la directive (142) de sécurité pendant l'exécution du composant (131) de commande de déroulement respectif.

8. Procédé suivant l'une des revendications 1 à 7,
dans lequel plusieurs composants (132) de commande de déroulement supplémentaires sont préinstallés (100) sur un hôte, sur le système (111) de fonctionnement duquel est installé l'environnement (112) de commande de déroulement.

9. Procédé suivant la revendication 8,
dans lequel on met à disposition, par le système (111) de fonctionnement de l'hôte (100), l'interface (130) pour la communication interprocessus entre le composant (131) de commande de déroulement respectif et le composant (132) de commande de déroulement supplémentaire, et dans lequel le composant de commande de déroulement supplémentaire accède, par une interface (110) de communication interprocessus d'hôte, aux ressources (101-103) critiques du point de vue de la sécurité nécessaires au composant de commande de déroulement respectif.

10. Procédé suivant l'une des revendications 1 à 9,
dans lequel le composant (132) de commande de déroulement supplémentaire contrôle, si l'accès aux ressources (101-103) nécessaires respectives critiques du point de vue de la sécurité est conforme à une directive (115, 142) de sécurité exigée et/ou mise à disposition, qui doit être appliquée pour le composant (131) de commande de déroulement respectif et/ou pour un hôte (100) respectif.

11. Procédé suivant l'une des revendications 1 à 10,
dans lequel les composants (131, 132) de commande de déroulement sont des conteneurs logiciels et dans lequel l'environnement (112) de commande de déroulement est un environnement de temps d'exécution de conteneur.

12. Système de mise à disposition d'applications de commande comprenant
- un environnement (112) de commande de déroulement formé au moyen d'un dispositif (100) serveur,
- au moins un composant (131) de commande de déroulement pour la mise à disposition d'une application de commande, dans lequel le composant de commande de déroulement est chargé dans l'environnement (112) de commande de déroulement et y est exécuté,
- dans lequel le système est agencé pour établir pour des applications de commande, dont l'exécution exige des privilèges sélectionnés, respectivement une spécification (212, 222) de ressources (101-103) nécessaires critiques du point de vue de la sécurité et en ce que
- à l'aide des spécifications, on détermine respectivement un composant (132) de commande de déroulement supplémentaire, qui est prévu pour la mise à disposition d'un accès aux ressources nécessaires critiques du point de vue de la sécurité, dans lequel on établit pour le composant de commande de déroulement respectif, les spécifications (212, 222) respectivement comme parties d'informations (211, 221) de configuration, qui comprennent respectivement une indication d'une représentation (210, 230) en mémoire du composant de commande de déroulement respectif et des règles spécifiques à une application et qui sont utilisées respectivement pour le chargement et/ou l'exécution du composant de commande de déroulement respectif,
- dans lequel l'environnement (112) de commande de déroulement est agencé, de manière à charger le composant de commande de déroulement supplémentaire déterminé dans l'environnement de commande de déroulement, en ce que
- l'on fait commencer une exécution du composant de commande de déroulement respectif conjointement avec le composant de commande de déroulement supplémentaire et en ce que
- l'on établit une interface (130) de communication entre processus entre le composant de commande de déroulement respectif et le composant de commande de déroulement supplémentaire,
- dans lequel le système est agencé en outre pour mettre à disposition l'accès aux ressources nécessaires respectivement et critiques du point de vue de la sécurité, au moyen d'une communication entre processus entre le composant de commande de déroulement respectif et le composant de commande de déroulement supplémentaire.
